# FASCICULE DE BREVET EUROPEEN

(11) **EP 2 591 998 B1**
(45) Date de publication et mention de la délivrance du brevet: **06.08.2014**
(21) Numéro de dépôt: 12190746.3
(22) Date de dépôt: 31.10.2012
(51) Int. Cl.: B64C 25/50

(54) **Procédé de recalage d'orientation pour un atterrisseur d'aéronef comportant une partie inférieure orientable.**
Verfahren zum Neueinstellen der Richtung eines Fahrwerks mit einem lenkbaren unteren Teil
A method of resetting the orientation of an aircraft undercarriage having a steerable bottom portion

(30) Priorité: 10.11.2011 FR 1160268
(43) Date de publication de la demande: 15.05.2013
(73) Titulaire: Messier-Bugatti-Dowty, 78140 Vélizy-Villacoublay (FR)
(72) Inventeur: Benmoussa, Michael, 78140 Velitzy-Villacoublay (FR)
(74) Mandataire: Parzy, Benjamin Alain

(56) Documents cités:
- WO-A1-2006/010890
- FR-A1- 2 787 761

## Description

L'invention concerne un procédé de recalage d'orientation pour un atterrisseur d'aéronef comportant une partie inférieure orientable.

### ARRIERE-PLAN TECHNOLOGIQUE DE L'INVENTION

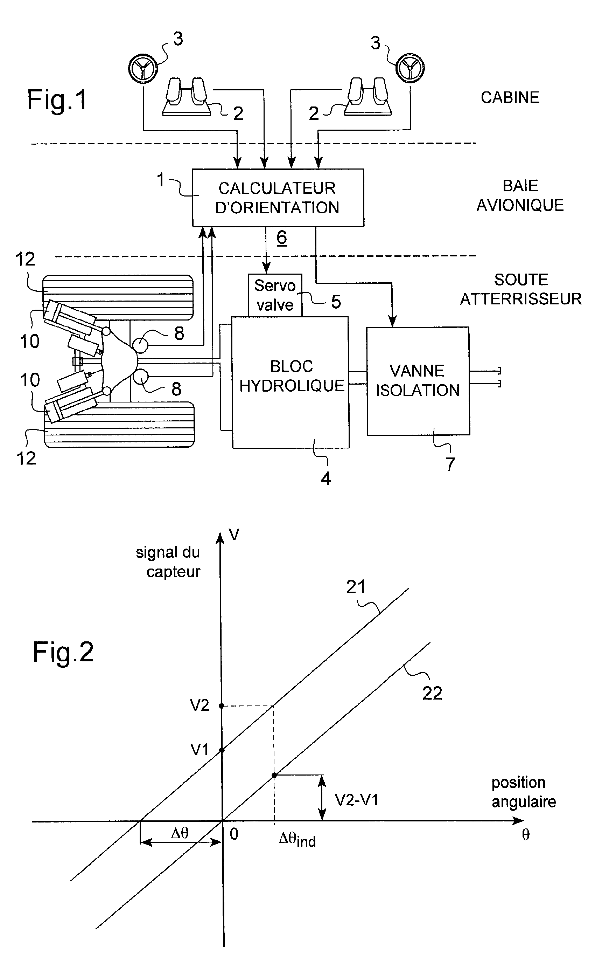

Comme cela est illustré sur le schéma de la figure 1, certains atterrisseurs sont équipés d'un organe d'orientation 10, ici des vérins montés en push-pull, pour faire pivoter une partie inférieure orientable 11 portant les roues 12 de l'atterrisseur. La position angulaire de la partie inférieure orientable est commandée à partir d'une consigne générée par un calculateur d'orientation 1, ou par actionnement par le pilote des pédales 2 ou d'un volant 3 (cf. FR 2 787 761).

Cette consigne de position angulaire est utilisée dans un asservissement (par exemple de type PID) qui compare cette consigne de position angulaire à une position angulaire mesurée de la partie inférieure orientable, et en cas de différence, l'organe d'orientation est activé pour faire pivoter la partie inférieure orientable jusqu'à ce que la position angulaire mesurée soit égale à la consigne de position angulaire. A cet effet, l'aéronef est équipé d'un bloc hydraulique 4 qui reçoit un fluide sous pression et qui est équipé d'une servovalve 5 pour distribuer ce fluide en réponse à un ordre 6 venant du calculateur d'orientation 1 aux vérins de l'organe d'orientation 10. En général, l'activation de la commande d'orientation n'est autorisée que si l'aéronef est au sol, l'atterrisseur étant alors au moins partiellement comprimé à l'encontre d'un effort interne de suspension généré par l'amortisseur interne à l'atterrisseur. A cet effet, une vanne d'isolation 7 est commandée par le calculateur d'orientation 1 pour admettre le fluide sous pression dans le bloc hydraulique 4 en réponse à la détection que l'aéronef est au sol.

La mesure de la position angulaire de la partie orientable fait appel à un ou des capteurs 8 disposés sur l'atterrisseur pour générer un signal électrique exploitable pour réaliser un tel asservissement. En général, on utilise des capteurs agencés de sorte qu'une variation du signal à partir d'une origine électrique soit proportionnelle à une variation de la position angulaire à partir d'une position angulaire particulière prise comme une origine de position angulaire, par exemple des capteurs de type RVDT dont l'angle de rotation est proportionnel à l'angle de rotation de la partie inférieure orientable.

Il est en général prévu une procédure de calage de l'origine électrique sur l'origine de position angulaire. A cet effet, on fait rouler l'aéronef au sol alors que l'atterrisseur est au moins partiellement comprimé en imprimant à la partie inférieure orientable une position angulaire qui conduit à un roulage rectiligne de l'aéronef. Cette position angulaire est prise comme origine de position angulaire, et on y fait correspondre l'origine électrique du signal de mesure de position angulaire.

Cependant, l'origine de position angulaire et l'origine électrique peuvent dériver avec le temps pour diverses raisons (usure, déréglage...), de sorte que les deux origines ne correspondent plus. Dès lors, le pilote est obligé de commander en permanence une petite déviation angulaire pour forcer l'aéronef à rouler de façon rectiligne.

### OBJET DE L'INVENTION

L'invention a pour objet de proposer un procédé permettant de diminuer les inconvénients liés à une telle dérive.

### DESCRIPTION DE L'INVENTION

En vue de la réalisation de ce but, on propose un procédé de recalage d'orientation pour un atterrisseur d'aéronef comportant un caisson dans lequel une partie inférieure orientable est montée pour coulisser à l'encontre d'un effort de suspension généré par un amortisseur, l'atterrisseur étant muni d'un organe d'orientation commandable pour faire pivoter la partie inférieure orientable en réponse à une consigne de position angulaire, l'atterrisseur comportant en outre au moins un capteur de position angulaire adapté à générer un signal électrique représentatif de la position angulaire de la partie inférieure orientable qui est exploitable pour commander l'organe d'orientation. Le procédé de recalage de l'invention comporte l'étape de, quand la partie inférieure orientable est dans une position angulaire indexée alors que l'aéronef est en vol et l'atterrisseur entièrement détendu, caler le signal électrique du capteur à une valeur de recalage déterminée.

En effet, il est usuel de prévoir dans un atterrisseur équipé d'une partie inférieure orientable un dispositif d'indexage angulaire, par exemple un dispositif à cames qui, lorsque l'atterrisseur est entièrement détendu, impose une position angulaire déterminée à la partie inférieure orientable vis-à-vis du caisson de l'atterrisseur (en général une position roues dans l'axe), afin d'éviter tout pivotement intempestif de la partie inférieure orientable de l'atterrisseur lors du relevage de celui-ci vers sa position stockée en soute, par exemple sous l'effet gyroscopique des roues qui continuent à tourner si elles ne sont pas freinées. Bien sûr, quand l'aéronef est au sol, les cames du dispositif d'indexage sont dégagées, de sorte qu'elles ne peuvent empêcher l'orientation de la partie inférieure orientable. On profite selon l'invention de l'existence de cette position indexée en vol pour recaler le signal du capteur de mesure en lui attribuant une valeur de recalage déterminée, ce qui revient à recaler l'origine électrique du signal.

Pour ce faire, on attend que l'aéronef ait décollé et que l'atterrisseur se soit entièrement détendu, ce qui est détecté par un capteur de détente. L'organe d'orientation étant normalement désactivé, la position angulaire de la partie inférieure est alors imposée par le dispositif d'indexage angulaire, par exemple un dispositif à cames. On attribue alors au signal électrique une valeur d'indexage déterminée telle que, lorsque l'aéronef est au sol et que le pilote ou le calculateur d'orientation commande une orientation nulle, l'aéronef roule de façon rectiligne.

Un mode particulier de mise en oeuvre du procédé de l'invention est maintenant expliqué en référence à la figure 2 qui est un graphe montrant les valeurs V du signal électrique du capteur de position en fonction de la position angulaire θ de la partie inférieure orientable dont l'origine est prise pour la position angulaire pour laquelle l'aéronef roule de façon rectiligne (appelée position neutre). Sur la courbe 21 qui est celle du signal électrique du capteur de position angulaire avant recalage, on constate que le signal du capteur prend une valeur V1 non nulle. Ainsi, si le pilote ou le calculateur d'orientation affiche une consigne de position angulaire nulle la partie inférieure orientable sera décalée d'un décalage Δθ par rapport à la position neutre, et l'aéronef ne va pas rouler de façon rectiligne. Il faudra que le pilote compense en demandant une orientation égale au décalage Δθ pour forcer l'aéronef à rouler de façon rectiligne.

Quand l'aéronef a décollé et l'atterrisseur s'est détendu, la partie inférieure orientable est dans la position angulaire indexée θind pour laquelle le signal du capteur de position angulaire prend une valeur V2.

Selon l'invention, alors que la partie inférieure orientable est dans la position angulaire indexée θind, on décale le signal (en pratique, sur le graphe, ce décalage correspond à une translation du signal selon une direction parallèle à l'axe des ordonnées) de sorte que la valeur du signal dans cette position soit égale à la valeur de recalage V2-V1.

On aboutit alors à la courbe 22 qui est celle du signal recalé. On constate que le signal recalé prend la valeur zéro lorsque la partie inférieure orientable est dans la position neutre.

En pratique, la position neutre et la position indexée sont proches l'une de l'autre, voire confondues. Dans ce dernier cas, bien évidemment, les valeurs V2 et V1 coïncident, de sorte que la valeur de recalage est nulle.

En effectuant ce recalage avant qu'une dérive significative n'ait le temps de s'installer, on diminue le risque d'une dérive conduisant à un roulage non rectiligne de l'aéronef lorsque le pilote ou le calculateur d'orientation commande une orientation nulle.

Ce recalage peut être effectué à chaque vol de l'aéronef, ou encore lors d'un vol qui suit une opération de maintenance de l'atterrisseur.

De façon préférée, le recalage de l'origine électrique du capteur de position angulaire est effectué juste avant l'atterrissage, alors que l'atterrisseur a été déployé. Bien sûr, dans la position déployée, l'atterrisseur est toujours détendu, et la partie inférieure orientable est maintenue dans la position angulaire indexée par le dispositif d'indexage.

Ce recalage « mécanique » permet une précision de l'ordre du degré, ce qui est largement suffisant pour assurer une commande d'orientation de qualité.

Bien entendu, pour des raisons de sûreté, il convient de vérifier que ce recalage reste dans des proportions raisonnables (typiquement quelques degrés au maximum). Si le recalage nécessite une valeur de recalage importante (typiquement plus de cinq degrés), le signe d'un dysfonctionnement de capteurs pourrait être engendré par une défaillance critique et permettre ainsi la détection de cette dernière.

## Revendications

1. Procédé de recalage d'orientation pour un atterrisseur d'aéronef comportant un caisson dans lequel une partie inférieure orientable est montée pour coulisser à l'encontre d'un effort de suspension généré par un amortisseur, l'atterrisseur étant muni d'un organe d'orientation commandable pour faire pivoter la partie inférieure orientable en réponse à une consigne de position angulaire, l'atterrisseur comportant en outre au moins un capteur de position angulaire adapté à générer un signal électrique représentatif de la position angulaire de la partie inférieure orientable qui est exploitable pour commander l'organe d'orientation ; le procédé étant **caractérisé en ce qu'il** comporte l'étape de, quand la partie inférieure orientable est dans une position angulaire indexée alors que l'aéronef est en vol et l'atterrisseur entièrement détendu, caler le signal électrique du capteur à une valeur de recalage (V2-V1) déterminée.

2. Procédé selon la revendication 1, dans lequel la valeur de recalage est égale à une différence entre une valeur (V2) du signal non recalé mesurée alors que la partie inférieure orientable de l'atterrisseur est dans la position angulaire indexée, et une valeur (V1) du signal non recalé mesurée alors que l'aéronef est au sol et que la partie inférieure de l'aéronef est calée pour provoquer un roulage rectiligne de l'aéronef

3. Procédé selon la revendication 1, dans lequel l'étape de recalage est effectuée à chaque vol de l'aéronef.

4. Procédé selon la revendication 1, dans lequel l'étape de recalage est effectuée entre un déploiement de l'atterrisseur et un atterrissage de l'aéronef.

## Patentansprüche

1. Verfahren zum Justieren der Ausrichtung eines Flugzeugfahrwerks, das ein Gehäuse umfasst, in dem ein lenkbarer unterer Abschnitt entgegen einer von einem Stoßdämpfer erzeugten Dämpfungskraft verschiebbar gelagert ist, wobei das Fahrwerk mit einem steuerbaren Ausrichtungsorgan versehen ist, um den lenkbaren unteren Abschnitt in Antwort auf einen Winkelpositionssollwert zu verschwenken, wobei das Fahrwerk ferner mindestens einen Winkelpositionssensor umfasst, der dazu geeignet ist, ein elektrisches Signal zu erzeugen, das repräsentativ für die Winkelposition des lenkbaren unteren Abschnitts und verwertbar ist, um das Ausrichtungsorgan zu steuern, wobei das Verfahren **dadurch gekennzeichnet ist, dass** es dann, wenn der lenkbare untere Abschnitt in einer indexierten Winkelposition ist, während sich das Flugzeug im Flug befindet und das Fahrwerk vollständig druckentlastet ist, den Schritt des Einstellens des elektrischen Signals des Sensors auf einen bestimmten Korrekturwert (V2-V1) umfasst.

2. Verfahren nach Anspruch 1, wobei der Korrekturwert gleich einer Differenz zwischen einem gemessenen Wert (V2) des nicht neueingestellten Signals, während der lenkbare untere Abschnitt des Fahrwerks in der indexierten Winkelposition ist, und einem gemessenen Wert (V1) des nicht neueingestellten Signals ist, während das Flugzeug am Boden und der untere Abschnitt des Flugzeugs eingestellt ist, um ein geradliniges Rollen des Flugzeugs hervorzurufen.

3. Verfahren nach Anspruch 1, wobei der Schritt des Justierens bei jedem Flug des Flugzeugs durchgeführt wird.

4. Verfahren nach Anspruch 1, wobei der Schritt des Justierens zwischen einem Ausfahren des Fahrwerks und einer Landung des Flugzeugs durchgeführt wird.

## Claims

1. A steering resetting method for an aircraft undercarriage that includes a leg in which a steerable bottom portion is mounted to slide against a suspension force generated by a shock absorber, the undercarriage being provided with a controllable steering member for causing the steerable bottom portion to swivel in response to an angular position setpoint, the undercarriage also including at least one angular position sensor adapted to generate an electrical signal representative of the angular position of the steerable bottom portion and suitable for use in controlling the steering member; the method being **characterized in that** it comprises the step, performed when the steerable bottom portion is in an indexed angular position while the aircraft is in flight and the undercarriage is fully extended, of setting the electrical signal from the sensor to a determined reset value (V2-V1).

2. A method according to claim 1, wherein the reset value is equal to the difference between a value (V2) of the non-reset signal as measured while the steerable bottom portion of the undercarriage is in the indexed angular position and a value (V1) of the non-reset signal as measured while the aircraft is on the ground and the bottom portion of the undercarriage is set so as to cause the aircraft to run in a straight line.

3. A method according to claim 1, wherein the resetting step is performed on each flight of the aircraft.

4. A method according to claim 1, wherein the resetting step is performed after the undercarriage has been deployed and before the aircraft lands.
